**Europäisches Patentamt**

**European Patent Office**

**Office européen des brevets**

(19)

(11) Veröffentlichungsnummer : **0 109 694**
**B1**

(12) # EUROPÄISCHE PATENTSCHRIFT

(45) Veröffentlichungstag der Patentschrift :
11.12.85

(51) Int. Cl.⁴ : **C 08 F240/00, C 09 J   3/14**

(21) Anmeldenummer : 83201264.5

(22) Anmeldetag : 02.09.83

(54) **Phenolmodifizierte Kohlenwasserstoffharze mit hoher OH-Zahl sowie Verfahren zu ihrer Herstellung und ihre Verwendung.**

(30) Priorität : 19.11.82 DE 3242782

(43) Veröffentlichungstag der Anmeldung :
30.05.84 Patentblatt 84/22

(45) Bekanntmachung des Hinweises auf die Patenterteilung : 11.12.85 Patentblatt 85/50

(84) Benannte Vertragsstaaten :
BE DE FR GB IT NL

(56) Entgegenhaltungen :
DE-B- 1 520 408
US-A- 4 210 733

(73) Patentinhaber : **Rütgerswerke Aktiengesellschaft**
**Mainzer Landstrasse 217**
**D-6000 Frankfurt a.Main 1 (DE)**

(72) Erfinder : **Lücke, Wolfgang**
**Stralsunder Strasse 13**
**D-4200 Oberhausen 11 (DE)**
Erfinder : **Beneke, Herbert, Dr.**
**Wartburgstrasse 97**
**D-6420 Castrop-Rauxel (DE)**
Erfinder : **Stäglich, Peter, Dr.**
**Wiessdornstrasse 33**
**D-4100 Duisburg 29 (DE)**
Erfinder : **Mühlenkamp, Manfred**
**Bahnhofstrasse 46a**
**D-4100 Duisburg 12 (DE)**

**Beschreibung**

Phenolmodifizierte Kohlenwasserstoffharze mit hoher OH-Zahl sowie Verfahren zu ihrer Herstellung und ihre Verwendung.

Die Erfindung betrifft neue phenolmodifizierte Kohlenwasserstoffharze mit hoher OH-Zahl und verbesserter Verträglichkeit mit nicht polaren aliphatischen Lösungsmitteln.

Synthetische Kohlenwasserstoffharze, die vorzugsweise durch Polymerisation von ungesättigten aromatischen Kohlenwasserstoffen hergestellt werden, erhalten durch zusätzliche polare Gruppen wie z. B. OH-Gruppen verbesserte Fähigkeiten zur Haftung auf verschiedenen Untergründen. Daher sind solche Kohlenwasserstoffharze, die einen hohen Anteil an OH-Gruppen haben, in der Beschichtungstechnik und der Klebstoffindustrie sehr gefragt.

Stabile Harze mit einer OH-Zahl größer als 6 werden in der deutschen Patentanmeldung DE-A-3 128 869 beschrieben. Diese Harze werden hergestellt durch Polymerisation von ungesättigten aromatischen Kohlenwasserstoffen in Gegenwart von Phenol oder substituierten Phenolen, wobei eine Teilmenge der ungesättigten aromatischen Kohlenwasserstoffe und/oder die gesamte Menge an Phenolen und an Katalysator vorgelegt werden und die Polymerisation durch Zugabe der restlichen ungesättigten aromatischen Kohlenwasserstoffe so gesteuert wird, daß sie nach Erreichen der gewählten Polymerisationstemperatur isotherm geführt wird. Dur diese Verfahrensführung wird erreicht, daß die Polymerisate neben einem hohen Phenolanteil nur einen schwachen Phenolgeruch haben.

Für die Herstellung von Klebstoffen werden diese Harze jedoch niemals allein für sich verarbeitet, sondern stets in Kombination und in Formulierungen mit anderen Harzen, Elastomeren und unter Verwendung von Lösungsmitteln von oft unterschiedlicher Polarität. Deswegen ist eine besonders gute Löslichkeit vorzugsweise in Alkoholen und in unpolaren aliphatischen Lösungsmitteln gewünscht.

Die Harze gemäß der deutschen Patentanmeldung DE-A-3 128 869 haben zwar eine gute Verträglichkeit mit niedrigen Alkoholen, sind aber in aliphatischen und cycloaliphatischen Lösungsmitteln unlöslich.

Es bestand daher die Nachfrage nach stabilen Kohlenwasserstoffharzen mit möglichst großer OH-Zahl, die sowohl in gebräuchlichen Alkoholen und aromatischen als auch in aliphatischen und cycloaliphatischen Lösungsmitteln löslich sind.

Diese Aufgabe wird gelöst durch Bereitstellen von phenolmodifizierten Kohlenwasserstoffen gemäß Anspruch 1.

Die Herstellung dieser Harze erfolgt durch katalytische Copolymerisation von Phenolverbindungen und aromatischen Kohlenwasserstoffen mit Isobuten gemäß der Verfahren nach Anspruch 3 oder 4. Diese Harze lassen sich gemäß der Ansprüche 5 und 6 verwenden.

Die erfindungsgemäßen Harze sind helle Produkte mit einem Erweichungspunkt im Temperaturbereich von 10-50 °C. Sie haben lediglich einen schwachen Geruch, d. h., daß die eingesetzten phenolischen Verbindungen vollständig gebunden sind.

Die Copolymerisation mit Isobuten bewirkt eine wesentliche Verbesserung der Verträglichkeit der Harze mit unpolaren Lösungsmitteln, so daß die erfindungsgemäßen Harze löslich sind in allen gebräuchlichen Lösungsmitteln wie z. B. auch n-Pentan, n-Hexan, Cyclohexan, Tetralin, Dekalin, Toluol. Überraschenderweise werden aber dadurch die polaren Eigenschaften nicht beeinträchtigt. So werden ausgezeichnete Klebeeigenschaften erhalten und es ist eine gute Verträglichkeit mit anderen polaren Harzen gegeben. Desgleichen ist eine gute Löslichkeit in polaren Lösungsmitteln vorhanden.

Zur Reaktion gelangen drei Rohstoffe unterschiedlicher Art : phenolische Verbindungen, ungesättigte Aromaten und Isobuten.

Als phenolische Verbindungen können sowohl einkernige Phenole als auch mehrkernige Phenole, wie das Phenol selbst, dessen alkyl-substituierte Homologe wie Kresole oder Xylenole sowie Naphthole eingesetzt werden, außerdem halogensubstituierte Phenole wie das Chlor- oder Bromphenol und mehrwertige Phenole wie Resorcin oder Benzkatechin.

Diese phenolischen Verbindungen können sowohl als Einzelverbindungen als auch als Gemisch in beliebiger Zusammensetzung verwendet werden.

Polymerisierbare aromatische Kohlenwasserstoffe finden sich einerseits in den im Temperaturbereich von 140 bis etwa 220 °C siedenden Destillaten aus dem Steinkohlenhochtemperaturteer, andererseits entstehen ungesättigte, aromatische Kohlenwasserstoffe bei der Crackung von Naphtha oder Gasöl sowie bei der Pyrolyse von Crackrückständen und sind in einer im Bereich von 160°-220 °C siedenden Fraktion, der sogenannten Harzölfraktion, angereichert. Diese Fraktionen enthalten als ungesättigte aromatische Verbindungen im wesentlichen Inden, Vinyltoluol, Methylinden, Cumaron, Dicyclopentadien, Methyldicyclopentadien, Styrol und α-Methylstyrol in einer Konzentration von 50 bis 70 % neben nicht reaktiven aromatischen Verbindungen.

Die Mengenverhältniss der Reaktionspartner liegen in folgenden Bereichen :

30-40 Gew.-%, vorzugsweise 34 Gew.-% phenolische Verbindungen

65-30 Gew.-%, vorzugsweise 46 Gew.-% ungesättigte aromatische Verbindungen

5-30 Gew.-%, vorzugsweise 20 Gew.-% Isobuten.

Die eingesetzten Mengen an phenolischen Verbindungen gewährleisten, daß die resultierenden Harze eine OH-Zahl von mindestens 4 haben. Andererseits ist es möglich, durch Einsatz mehrwertiger Phenole die OH-Zahl bis zu etwa 9 zu steigern. Überraschenderweise wurde dabei gefunden, daß der stabile Einbau der phenolischen Verbindungen durch die Copolymerisation mit der aliphatischen, ungesättigten Verbindung begünstigt wird, so daß auch die Produkte mit hohen Phenolanteilen nur einen geringen Phenolgerich aufweisen.

Die Polymerisation dieser ungesättigten, aromatischen Verbindungen erfolgt im allgemeinen mit Hilfe von Säuren oder Friedel-Crafts-Katalysatoren wie z. B. Trichloressigsäure, Bortrifluorid-Komplexen, Aluminium-, Antimon V- oder Zinn-IV-chlorid.

Die Reaktionstemperaturen liegen im Bereich von 20-140 °C. Sie sind bedingt durch die kritische Temperatur des Isobutens und dem während der Reaktion herrschenden Druck.

Wenn die Polymerisationstemperatur im Bereich von 40-140 °C liegt, werden bei Raumtemperatur flüssige Harze enthalten. Bei einer niedrigeren Polymerisationstemperatur resultieren Harze mit einem Erweichungspunkt bis etwa 50 °C. Die Führung der exothermen Polymerisationsreaktion erfolgt dabei jeweils so, daß man nach Erreichen der gewünschten Polymerisationstemperatur diese durch dosiertes Zugeben der ungesättigten Reaktionspartner und/oder durch Kühlen konstant hält.

Zur Durchführung der Polymerisation werden Katalysator und Phenol oder Phenolgemisch bevorzugt als Lösung in aromatischen Lösungsmitteln vorgelegt und die ungesättigten aromatischen Kohlenwasserstoffe und das Isobuten im festgelegten Verhältnis nach und nach zudosiert. Dies kann dadurch erfolgen, daß die ungesättigten, aromatischen Kohlenwasserstoffe und Isobuten gekühlt gemischt werden und auf einer Temperatur unterhalb des Siedebeginns des Gemisches gehalten werden und daß dieses Gemisch den phenolischen Verbindungen portionsweise oder kontinuierlich unter Kühlung so zudosiert wird, daß die Polymerisation isotherm erfolgt. Dann kann die Reaktion unter Normaldruck durchgeführt werden und die Polymerisationstemperaturen liegen im Bereich von 20-140 °C. Es ist aber auch möglich, daß die phenolischen Verbindungen und der Katalysator bei einer Temperatur im Bereich von 10-50 °C vermischt und die aromatischen, ungesättigten Kohlenwasserstoffe und das Isobuten ungekühlt im vorgegebenen Verhältnis getrennt zugegeben werden. Das gasförmige Isobuten wird dabei unter einem Druck von bis zu 6 bar in das Reaktionsgefäß geleitet und die Reaktion unter einem Druck von bis zu 4 bar durchgeführt. Je nachdem, wie schnell die Reaktanten miteinander vermischt werden, werden Reaktionstemperaturen bis 140 °C erhalten. Bei Erreichen der gewünschten Polymerisationstemperatur wird durch Kühlung und/oder Dosierung der Zugabe der Reaktanten die Reaktion so gesteuert, daß die Polymerisation isotherm erfolgt.

Die entstandenen Harze sind praktisch geruchsfreie Produkte, die entweder bei Raumtemperatur flüssig sind oder Erweichungspunkte bis etwa 50 °C haben. Aufgrund der hohen Phenolanteile und damit verbunden der hohen OH-Zahl ist die Verträglichkeit mit polaren Harzen, wie z. B. Epoxidharzen ausgezeichnet. Ebenso ist eine nahezu unbegrenzte Mischbarkeit mit Methanol gegeben, aber auch mit anderen Alkoholen, die eine längere aliphatische Kette haben, wie z. B. mit Äthanol, Isopropanol oder Butanol. Von besonderer Bedeutung aber ist eine zusätzlich erzielte Verträglichkeit mit aliphatischen und cycloaliphatischen Lösungsmitteln wie z. B. Pentan, Hexan, i-Oktan oder Cyclohexan.

So verdeutlicht die folgende Tabelle mit Hilfe des Trübungspunktes von 50 %igen Lösungen erfindungsgemäßer Harze die Löslichkeit der Harze in Testbenzin bei jeweils verschiedenem Isobutengehalt der Harze :

Testbenzinlöslichkeit (Trübungspunkt) einer 50 %igen Lösung erfindungsgemäßer Harze in Abhängigkeit vom Isobutengehalt

| Isobutengehalt $[\%]$ | 0 | 5 | 10 | 15 | 20 |
|---|---|---|---|---|---|
| OH-Zahl | 6,2 | 5,9 | 6,3 | 5,8 | 5,8 |
| Trübungspunkt $[°C]$ | 50 | 27 | 12 | -7 | -31 |

Diese Eigenschaften ermöglichen es, daß die erfindungsgemäßen Harze in einem weiten Bereich von Beschichtungs- und Kleberrezepturen problemlos eingesetzt werden können. Besonders vorteilhaft sind dabei Reaktionskleber mit Isocyanaten, bei denen die phenolischen OH-Gruppen mit den Isocyanatgruppen reagieren. Durch Auswahl der Anteile an OH-Gruppen und Isocyanatgruppen können derartige Kleber so eingestellt werden, daß sie nach Zugabe eines Beschleunigers entweder voll vernetzen und

aushärten, oder, bei Isocyanatüberschuß, lediglich vorvernetzen und somit lagerstabile Beschichtungsmaterialien ergeben, die dann bei Gebrauch mit Luftfeuchtigkeit aushärten.

Beispiel 1

In einem mit Rührer versehenen Reaktionsgefäß, das durch Heizung und Mantelkühlung so thermostatisiert ist, daß die Reaktion bei ca. 40 °C isotherm ablaufen kann, werden

3 215 g einer 70 %igen Lösung von Phenol in Toluol vorgelegt und mit

65 ml $BF_3$. Dimethyläther versetzt. Anschließend wird im Verlauf von 1-1 1/2 Stunden unter ständigem Rühren ein flüssiges Gemisch von

1 090 g Isobuten und

3 000 g Harzölfraktion (Siedebereich von 160-210 °C) zudosiert.

Das Gemisch aus Isobuten und Harzöl wird auf − 3 °C gekühlt, ebenso wie der Pumpenkopf der Dosierpumpe. Dadurch wird ein vorzeitiges Verdampfen des Isobutens vermieden. Nach beendeter Zugabe dieses Gemisches läßt man noch 30 min. nachreagieren und isoliert das entstandene Kohlenwasserstoffharz nach herkömmlicher Methode.

Es werden 3 500 g eines schwach riechenden Harzes erhalten mit einem Erweichungspunkt von 18 °C (K.S.) und einer Helligkeit (Barrett) von 8 1/2. Die OH-Zahl des Harzes beträgt 5,99 %. Die Löslichkeit dieses Harzes in verschiedenen Lösungsmitteln bei Raumtemperatur ergibt sich aus folgender Aufstellung :

Harzkonzentration [%]

| Lösungsmittel | 50 | 33 1/3 | 25 | 10 |
|---|---|---|---|---|
| n-Pentan | klar | trüb | trüb | trüb |
| n-Hexan | klar | klar | trüb | trüb |
| Cyclohexan | klar | klar | klar | klar |
| Toluol | klar | klar | klar | klar |
| Tetralin | klar | klar | klar | klar |

Beispiel 2

Kleber mit zeitlich verzögerter Abbindung
Zusammensetzung :
a) 100 Gewichtsteile Harz gemäß Beispiel 1 ;
b) 5-10 Gewichtsteile Diphenylmethan-4.4'-diisocyanat (z. B. Desmodur VL) ;
c) 100 Gewichtsteile eines höhermolekularen Polyurethan-Präpolymers mit reaktionsfähigen Isocyanatgruppen (z. B. Desmodur E 14) ;
d) 150 Gewichtsteile Lösungsmittelgemisch (z. B. bestehend aus gleichen Teilen Benzin 60/90, Aethylacetat u. Toluol) ;
e) 0,5 Gewichtsteile tertiäres Amin (z. B. Desmorapid PP).

Die Komponenten a-d werden gemischt, ohne daß eine Reaktion eintritt. Auch die Erwärmung führt nicht zu einem Start der Reaktion.

Erst die Vermischung mit dem Beschleuniger e) löst die Härtungsreaktion aus.

Durch Einsatz geringer Anteile der Komponente b) erhält man einen weichen und mit Zunahme der Komponente b) einen immer härteren Kleber.

Beispiel 3

Feuchtigkeitshärtendes Beschichtungsmaterial

Zusammensetzung :
a) 100 Gewichtsteile = 28,5 % Harz gemäß Beispiel 1 ;
b) 50 Gewichtsteile = 14,3 % Diphenylmethan-4,4'-diisocyanat (z. B. Desmodur VL) ;
c) 50 Gewichtsteile = 14,3 % eines höhermolekularen Polyurethan-Präpolymers mit reaktionsfähigen Isocyanatgruppen (z. B. Desmodur E 14) ;
d) 150 Gewichtsteile = 42,8 % Lösungsmittelgemisch (z. B. bestehend aus gleichen Teilen Benzin 60/90, Aethylacetat und Toluol) ;
e) 0,5 Gewichtsteile = 0,14 % tertiäres Amin (z. B. Desmorapid PP).

Alle Komponenten werden gemischt. Nach Zugabe des Beschleunigers e) erfolgt die Vorvernetzung der OH- mit den Isocyanatgruppe. Die noch freien Isocyanatgruppen reagieren bei Gebrauch mit der Luftfeuchtigkeit, nachdem der Anstrich aufgetragen worden ist.

## Patentansprüche

1. Phenolmodifizierte Kohlenwasserstoffharze, die eine OH-Zahl von mindestens 4 haben und die durch katalytische Copolymerisation von
30-40 Gew.-% phenolischen Verbindungen,
65-40 Gew.-% aromatischen, ungesättigten Kohlenwasserstoffen und,
5-30 Gew.-% Isobuten,
hergestellt sind.

2. Phenolmodifizierte Kohlenwasserstoffharze nach Anspruch 1, dadurch gekennzeichnet, daß sie durch Copolymerisation von 34 Gew.-% phenolischen Verbindungen, 46 Gew.-% aromatischen, ungesättigten Kohlenwasserstoffen und 20 Gew.-% Isobuten hergestellt sind.

3. Verfahren zur Herstellung der phenolmodifizierten Kohlenwasserstoffharze nach Anspruch 1 und 2, dadurch gekennzeichnet, daß zuerst die phenolische Verbindung mit dem Katalysator vermischt und dazu ein Gemisch aus den aromatischen, ungesättigten Kohlenwasserstoffen und Isobuten, das auf die Temperatur unterhalb des Siedebeginnes der Gemisches gekühlt ist, unter Kühlung portionsweise zugegeben und die Polymerisationsreaktion isotherm bei einer Temperatur unterhalb 140 °C bei Normaldruck durchgeführt wird.

4. Verfahren zur Herstellung der phenolmodifizierten Kohlenwasserstoffharze nach Anspruch 1 und 2, dadurch gekennzeichnet, daß die phenolische Verbindung und der Katalysator bei einer Temperatur im Bereich von 10-50 °C vermischt und die aromatischen, ungesättigten Kohlenwasserstoffe und Isobuten getrennt so dosiert zugeleitet werden, daß die Reaktionstemperatur 140 °C nicht übersteigt, wobei die Reaktion unter einem Druck bis zu 4 bar durchgeführt wird.

5. Klebstoffmischungen, enthaltend phenolmodifizierte aromatische Kohlenwasserstoffharze nach Anspruch 1 und 2.

6. Feuchtigkeitshärtende Beschichtungsmaterialien, enthaltend phenolmodifizierte aromatische Kohlenwasserstoffharze nach Anspruch 1 und 2 und Verbindungen mit Isocyanatgruppen, wobei die Zahl der Isocyanatogruppen größer ist als die der phenolischen OH-Gruppen.

## Claims

1. Phenolic-modified hydrocarbon polymers with an OH-number of at least 4 which are prepared through the catalytic copolymerization of :
30-40 % by weight phenolic compound,
54-30 % by weight aromatic unsaturated hydrocarbon, and,
5-30 % by weight isobutene.

2. Phenolic-modified hydrocarbon polymers as claimed in claim 1, characterized in that they are prepared by the copolymerization of 34 % by weight of phenolic compound, 46 % by weight of aromatic unsatured hydrocarbon and 20 % by weight of isobutene.

3. A method of preparing phenolic-modified hydrocarbon polymers as claimed in claims 1 and 2, comprising mixing the phenolic compound with the catalyst, adding thereto in portions while cooling a mixture comprising an aromatic unsaturated hydrocarbon and isobutene, which is cooled down to a temperature below the initial boiling point of said mixture, and carrying out a polymerization reaction isothermally at normal pressure and at a temperature below about 140 °C.

4. A method of preparing the phenolic-modified hydrocarbon polymers as claimed in claims 1 and 2, comprising mixing the phenolic compound and the catalyst for the reaction at a temperature ranging from 10° to 50 °C and feeding the aromatic unsatured hydrocarbons and isobutene in separate dosages so that the reaction temperature does not exceed about 140 °C and carrying out the reaction at a pressure up to 4 bar.

5. Adhesive compositions containing phenolic-modified aromatic hydrocarbon polymers as claimed in claims 1 and 2.

6. Coating compositions which harden in the presence of moisture, containing a phenolic-modified aromatic hydrocarbon polymer as claimed in claims 1 and 2, and at least one compound with an isocyanate group in which the number of isocyanate groups is greater than that of the phenolic OH-groups.

**Revendications**

1. Résines hydrocarbonées modifiées par des phénols, présentant un indice de —OH d'au moins 4 et qui sont préparées par copolymérisation catalytique de
30-40 % en poids de composés phénoliques,
65-30 % en poids d'hydrocarbures aromatiques insaturés, et
5-30 % en poids d'isobutène.

2. Résines hydrocarbonées modifiées par des phénols selon la revendication 1, caractérisées en ce qu'elles sont préparées par copolymérisation de
34 % en poids de composés phénoliques,
46 % en poids d'hydrocarbures aromatiques insaturés, et
20 % en poids d'isobutène.

3. Procédé de préparation des résines hydrocarbonées modifiées par des phénols selon la revendication 1 et 2, caractérisé en ce qu'on mélange d'abord le composé phénolique avec le catalyseur et qu'on ajoute en refroidissant, par portions, un mélange des hydrocarbures aromatiques insaturés et d'isobutène, refroidi à une température inférieure au début de l'ébullition du mélange, et qu'on effectue la réaction de polymérisation de manière isotherme à une température inférieure à 140 °C, à la pression normale.

4. Procédé de préparation des résines hydrocarbonées modifiées par des phénols selon la revendication 1 et 2, caractérisé en ce qu'on mélange le composé phénolique et le catalyseur à une température du domaine de 10-50 °C et qu'on ajoute les hydrocarbures aromatiques insaturés et l'isobutène séparément et dosés de telle manière que la température de réaction ne dépasse pas 140 °C, la réaction étant réalisée sous une pression allant jusqu'à 4 bars.

5. Mélanges de colles contenant des résines hydrocarbonées aromatiques modifiées par des phénols selon la revendication 1 et 2.

6. Matières de revêtement durcissant à l'humidité contenant des résines hydrocarbonées aromatiques modifiées par un phénol selon la revendication 1 et 2, et des composés avec des groupes isocyanates, le nombre de groupes isocyanates étant supérieur à celui des groupes —OH phénoliques.